# EUROPEAN PATENT APPLICATION

(11) **EP 1 049 292 A2**
(43) Date of publication of application: **02.11.2000**
(21) Application number: 00303441.0
(22) Date of filing: 25.04.2000
(51) Int. Cl.: H04L 12/26, H04L 29/06

(54) **System and method for network monitoring**

(30) Priority: 30.04.1999 US 303724
(71) Applicant: Hewlett-Packard Company, Palo Alto, California 94304 (US)
(72) Inventor: Dowling, Brian M., El Eldorado Hills, California 95762 (US); L'Ecuyer, Brian P., Elk Grove, California 95624 (US)
(74) Representative: Powell, Stephen David

(57) **Abstract**

An algorithmic snoop unit (28) snoops interleaved transactions over a shared bus (42) as data is transmitted via transactions between clients (34, 36, 38) coupled to the shared bus, and executes various algorithms upon data snooped from the transactions. The unit includes one or more algorithmic entries (46, 48, 50) along with an algorithmic engine (44). Each algorithmic entry includes a client ID register that identifies the client associated with a transaction, a starting address register and an ending address that define the address range upon which an algorithm will be executed, a read or write flag that identifies whether the transactions is a read or write operation, an encryption key register for holding an encryption key, a decryption key register for holding a decryption key, an algorithm ID register for identifying an algorithm to be executed, a status/control register which holds various status and control, an accumulator for accumulating results from the execution of the algorithm, a temporary storage area, and one or more memory pointers that index a location in memory for results comprising a large amount of data. If a match is found, the algorithm identified by the algorithm ID register is executed upon the data carried by the transaction.

## Description

The present invention relates to algorithms that perform functions upon data streams as the data streams are carried by bus transactions, such as checksum functions that verify integrity and cryptographic functions that provide security. More specifically, the present invention snoops interleaved transactions over a shared bus architecture as data is transmitted via transactions between clients coupled to the shared bus, and executes various algorithms upon data snooped from the transactions.

In the art of computer networking, protocol stacks are commonly used to transmit data between network nodes that are coupled by network media. Network nodes include devices such as computer workstations, servers, network printers, network scanners, and the like. To harmonize the development and implementation of protocol stacks, the International Standards Organization (ISO) promulgated an Open System Interconnection (OSI) Reference Model that prescribes seven layers of network protocols.

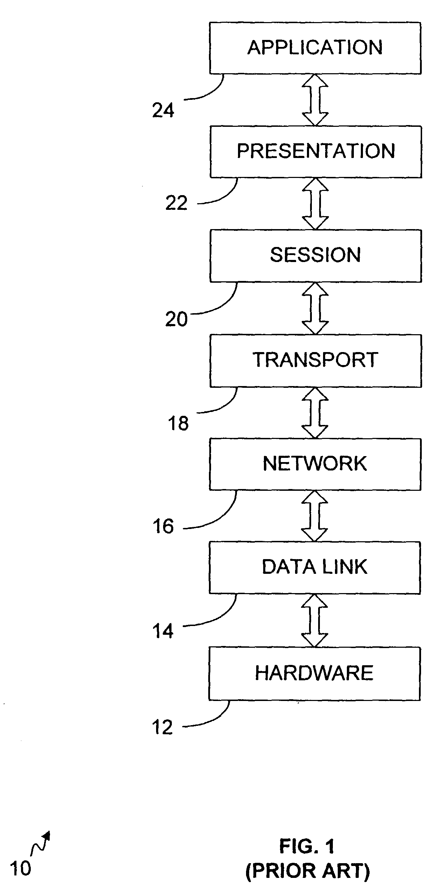

Figure 1 is a block diagram 10 of the OSI reference model. The model includes a hardware layer 12, a data link layer 14, a network layer 16, a transport layer 18, a session layer 20, a presentation layer 22, and an application layer 24. Each layer is responsible for performing a particular task. Hardware layer 12 is responsible for handling both the mechanical and electrical details of the physical transmission of a bit stream. Data link layer 14 is responsible for handling the packets, including any error detection and recovery that occurred in the physical layer. Network layer 16 is responsible for providing connections and routing packets in the communication network, including handling the address of outgoing packets, decoding the address of incoming packets, and maintaining routing information for proper response to changing loads. Transport layer 18 is responsible for low-level access to the network and the transfer of messages between the users, including partitioning messages into packets, maintaining packet order, flow control, and physical address generation. Session layer 20 is responsible for implementing the process-to-process protocols. Presentation layer 22 is responsible for resolving the differences in formats among the various sites in the network, including character conversions, and half duplex/full duplex (echoing). Finally, application layer 24 is responsible for interacting directly with the users. Layer 24 may include applications such as electronic mail, distributed data bases, web browsers, and the like.

Before the ISO promulgated the OSI reference model, the Defense Advanced Research Projects Agency (DARPA) promulgated the ARPNET reference model. The ARPNET reference model includes four layers, a network hardware layer, a network interface layer, a host-to-host layer, and a process/application layer.

As their names imply, the OSI reference model and the ARPNET reference model provide guidelines that designers of protocols may or may not chose to follow. However, most networking protocols define layers that at least loosely correspond to a reference model.

In the field of computing, there are many popular protocols used to transmit data between network nodes. For example, TCP/IP, AppleTalk®, NetBEUI, and IPX are all popular protocols that are used to transmit data between servers, workstations, printers, and other devices that are coupled to computer networks.

Whether a network node has a single "network client" or many "network clients", it is common for a network node to use several transmission protocols. As used herein, the term "network client" refers to a device (such as a network adapter, port, or modem) that is used to transmit data between two network nodes over network media. For example, a typical computer workstation may use TCP/IP to communicate over the Internet via a modem, and IPX to communicate with a network server via a network adapter. Likewise, a printer may be configured to receive print jobs using either both the AppleTalk® protocol and the NetBEUI protocol over the same network adapter. Typically, a software routine existing at data link layer 14 or network layer 16 routes data packets between the network adapter and the proper protocol stack.

Various protocols also define methods to verify the integrity of data transmitted by the protocol. For example, consider a TCP/IP packet as it arrives at a network client such as an Ethernet network adaptor. The entire Ethernet packet is protected by a cyclic redundancy check (CRC) code that is calculated and stuffed into the Ethernet packet by the sending network adapter, and is used by the receiving network adapter to verify the integrity of the Ethernet packet. If the integrity of the packet cannot be verified, the packet is discarded.

Encapsulated within the Ethernet packet is the IP portion of the TCP/IP protocol. The IP portion has a 16 bit checksum code that protects the IP header. If the integrity of the IP header cannot be verified, the packet is discarded. The TCP portion of the TCP/IP protocol is encapsulated within the IP portion, and has a 16 bit checksum code that protects the TCP header and the contents of the TCP portion of the packet. If the integrity of the TCP header or the contents of the TCP portion cannot be verified, the packet is discarded and the sender will retransmit the packet after not receiving an acknowledge packet from the intended recipient.

In the example discussed above, the integrity of the Ethernet packet is verified by the networking hardware at hardware layer 12. Accordingly, this function is performed quite quickly. However, the higher layers of the protocol stack are typically implemented by software. Calculating a checksum using a software routine is considerably slower. In the prior art, a checksum required by a higher layer of the protocol stack could not be generated at the hardware layer because the hardware layer did not have knowledge of the higher layers of the stack.

One prior art solution that speeds up the generation of a checksum at a higher layer of a protocol stack is to use a hardware checksumming facility that is controlled by the higher layer of the protocol stack. For example, when a TCP module seeks to verify the integrity of a TCP header and its respective data, the TCP module writes to a register of the hardware checksumming facility to begin the checksumming process, and polls the facility to determine when the checksum is complete. While such a solution is faster than a checksum generated solely by a software routine, there is still a significant delay while the checksum is generated.

Another method of calculating checksums using hardware was disclosed by Snyder et al. in U.S. Pat. No. 5,522,039, which is entitled "Calculation of Network Data Check Sums by Dedicated Hardware With Software Corrections." This patent discloses generating a "gross checksum" for the entire packet as the packet is transferred via a direct memory access (DMA) operation between adapter memory and system memory. Higher layers of the protocol stack then calculate the checksum required by calculating a "difference checksum" for the portions of the packet that are not needed, and then subtracting this difference checksum from the gross checksum to form a "net checksum", which is the checksum required by that layer of the protocol stack. Since the difference checksum calculated by software is calculated over a relatively small number of bytes, the scheme disclosed by Snyder et al. incurs a smaller time penalty than other prior art methods.

In U.S. Application Serial No. 08/937,912, which is entitled "Hardware Checksum Assist For Protocol Stacks" and was filed on September 25, 1997, Brian M. Dowling et al. disclose a scheme whereby checksums and other algorithms may be calculated upon data as it is received by a network client, such as an Ethernet adapter. This application is incorporated by reference. As disclosed by Dowling et al., a fly-by checksum generation unit is embedded in a network client. As the network client transfers a packet into memory, the fly-by checksum unit calculates a checksum. Dowling et al. also disclose that the fly-by checksum unit includes beginning and ending byte registers, thereby reducing or eliminating the need to use software to calculate a difference checksum, as disclosed by Snyder et al.

Snyder et al. and Dowling et al. each reduce the overhead required to generate a checksum by reducing the number of times that the data must be "touched". However, the mechanisms disclosed by Snyder et al. and Dowling et al. must be provided for each network client. In contrast, software routines and hardware checksumming facilities do not need to be provided for each network client, but are slower for the reasons discussed above.

The number of types of network clients provided in typical computer systems is proliferating. Network clients currently available include network adapters (including Ethernet adapters, token ring adapters, and the like), parallel pods, serial ports, modems (including standard V90 phone modems, DSL modems, cable modems, ISDN modems, and the like), USB ports, IEEE 1394 ports, IR and RF ports, SCSI ports, and EIDE ports. In addition, new network client standards continue to be developed, such as the HomePNA standard that allows network nodes to be connected via standard phone lines. It is contemplated that encryption and authentication will be important components of the HomePNA standard because phone lines are not secure. Protocols, such as TCP/IP, may be used to transmit data via many of these network client standards.

In a network node that includes several network clients, it is often not practical to include the mechanisms disclosed by Snyder et al. or Dowling et al. because such a mechanism must be included with each network client. What is needed in the art is a method and apparatus that provides performance advantages disclosed by Snyder et al. and Dowling et al., yet does not need to be replicated for each network client.

The present invention is an algorithmic snoop unit that snoops interleaved transactions over a shared bus as data is transmitted via transactions between clients coupled to the shared bus, and executes various algorithms upon data snooped from the transactions. An algorithmic snoop unit in accordance with the present invention is coupled to the shared bus along with a variety of bus clients, such as a system CPU, storage unit(s), and one or more network clients. The algorithmic snoop unit itself is also a bus client.

Within the algorithmic snoop unit of the present invention is one or more algorithmic entries along with an algorithmic engine. Each algorithmic entry includes a series of algorithmic entry control information registers and a result / temporary storage unit. The algorithmic entry control information registers include a client ID register that identifies the client associated with a transaction, a starting address register and an ending address that define the address range upon which an algorithm will be executed, a read or write flag that identifies whether the transaction is a read or write operation, an encryption key register for holding an encryption key, a decryption key register for holding a decryption key, an algorithm ID register for identifying an algorithm to be executed, and a status / control register which holds various status and control bits. The result / temporary storage unit includes an accumulator for accumulating results from the execution of the algorithm, a temporary storage area, and one or more memory pointers that index a location in memory where results comprising a large amount of data (such as the results of a cryptographic algorithm) may be stored.

The algorithmic engine includes a bus separation unit, an algorithmic entry match unit, and an algorithmic calculation unit. The bus separation unit separates a bus transactions into address, data, client ID, and read / write status components. The algorithmic match unit compares these components with the contents of corresponding registers of each active algorithmic entry. If a match is found, the algorithm identified by the algorithm ID register is executed upon the data carried by the transaction. More than one algorithm may be executed for each transaction.

One of the primary benefits provided by the present invention is that the execution of as many algorithm as desired may be "piggy backed" upon a memory transfer that must occur anyway. Since an algorithmic snoop unit in accordance with the present invention does not depend on the system CPU to execute algorithms, and existing transactions are snooped to provide data to the algorithmic snoop unit, very few additional system resources are used and execution of the algorithms is complete as soon as the memory transfer is complete.
Figure 1 is a block diagram of an Open System Interconnection (OSI) reference model.
Figure 2 is a simplified block diagram of a system in accordance with the present invention.
Figure 3 is a block diagram of an algorithmic snoop unit shown in Figure 2, in accordance with the present invention.
Figure 4 is a block diagram of algorithmic entry control information registers of an algorithmic entry of the algorithmic snoop unit of Figure 3.
Figure 5 is a block diagram of a result / temporary storage unit of the algorithmic entry of the algorithmic snoop unit 28 of Figure 3.
Figure 6 is a block diagram of an algorithmic engine, which is part of the algorithmic snoop unit of Figure 3.

The present invention executes algorithms that perform functions, such as checksum functions that verify integrity and encryption functions that provide security, upon data by snooping interleaved transactions over a shared bus as the data is transmitted via the transactions. As used herein, the term "interleaved transactions" refers to the fact that the bus transactions carrying a particular stream of data need not be contiguous. In other words, different bus clients may own the bus during the period in which the stream is being transmitted. For example, if two data streams are being transmitted over a bus during the same time interval, the bus transactions may possibly be interleaved such that first, third, fourth, and eighth bus transactions carry data that is part of the first stream, and second, fifth, sixth, and seventh bus transactions carry data that is part of the second stream.

The present invention could be especially useful in devices such as a Hewlett-Packard JetDirect print server, wherein multiple network clients are integrated into a single device. However, the present invention may be advantageously used in any system wherein a plurality of bus clients communicate via a shared bus, and transactions carried by the bus can be snooped.

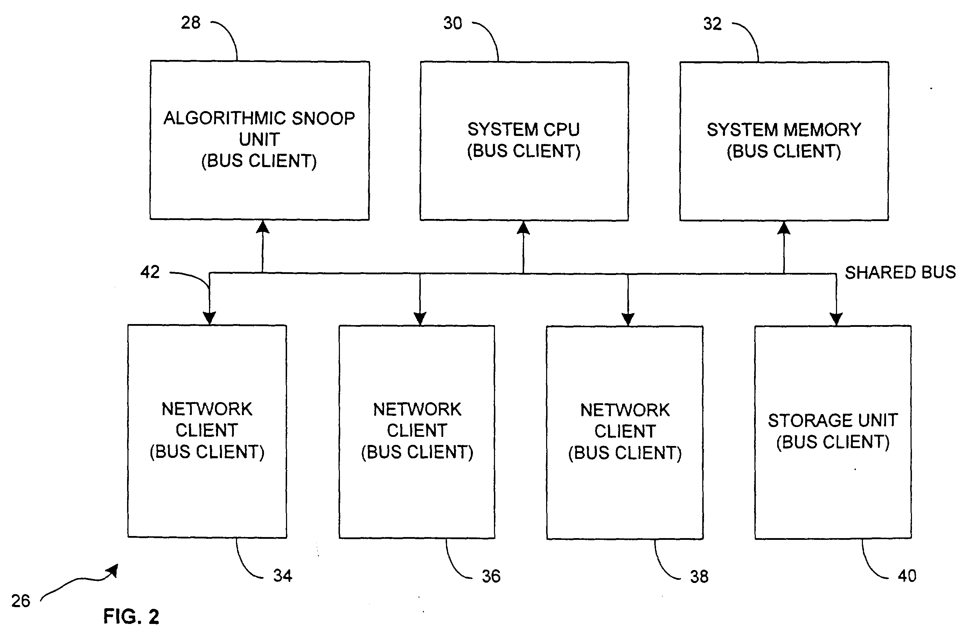

Figure 2 is a simplified block diagram of a system 26 in accordance with the present invention. System 26 includes algorithmic snoop unit 28, system CPU 30, system memory 32, network clients 34, 36, and 38, storage unit 40, and shared bus 42. Network clients 34, 36, and 38 may be any type of network client known in the art. For example, network client 34 may be a HomePNA network adapter, network client 36 may be a IEEE 1394 adapter, and network client 38 may be an Ethernet adapter. Of course, these examples are merely representative, and the network clients may be any type of device that transmits data between computing devices over network media. For example, if system 26 is a Hewlett-Packard JetDirect print server, it would be desirable to have one of the network clients be a IEEE 1284 parallel port or a serial port.

Storage unit 40 represents any type of storage unit known in the art, such as a hard disk drive, a CD-ROM drive, or a floppy disc drive. Storage unit 40, algorithmic snoop unit 28, system CPU 30, system memory 32, and network clients 34, 36, and 38 are generically referred to as bus clients. Each bus client is capable of transferring data between itself and another bus client via shared bus 42.

Shared bus 42 represents any interconnection fabric through which data flows between the bus clients (algorithmic snoop unit 28, system CPU 30, system memory 32, and network clients 34, 36, and 38, and storage unit 40). The main requirement is that algorithmic snoop unit 28 be capable of snooping transactions between the bus clients. Note that in one particular configuration described in greater detail below, it is desirable to have algorithmic snoop unit 28 snoop its own memory transactions. Network clients 34, 36, and 38, algorithmic snoop unit 28, and storage unit 40 will typically transmit data using direct-memory access (DMA) operations, as is known in the art.

System 26 may be implemented on a single integrated circuit microcontroller. For example, system CPU 30 may be implemented as an ARM CPU macrocell provided by ARM Ltd., with shared bus 42 adhering to the ARM Advanced System Bus (ASB) specification of the Advanced Microcontroller Bus Architecture (AMBA) specified by ARM Ltd.

The ASB is non-multiplexed and includes separate address and data buses, as well as a series of bus control lines. The read / write status of the transaction and the identity of the client are easily derived from the bus control lines. In this example, wherein shared bus 42 is an ASB-AMBA bus, algorithmic snoop unit 28 monitors bus 42 to determine when a bus client is writing to another bus client, such as particular memory range in system memory 32. Based on the bus client writing the data and the bus client to which data is being written, unit 28 may perform an algorithmic function on the data as the data is being transferred over bus 42.

Now consider that system 26 represents a computer system based on a PCI bus architecture, and network clients 34, 36, and 38 are implemented as PCI cards. In such a configuration the PCI cards may or may not be on the same PCI bridge, so it may not be possible to snoop transactions between the network clients and system memory 32 from another PCI slot. If the network clients are all on the same bridge, then algorithmic snoop unit 28 may exist on a PCI card that is also in the same bridge. On the other hand, if the network clients are on different (or individual) bridges, then unit 28 must be provided in a location within the bus fabric that allows unit 28 to snoop the transactions. Those skilled in the art will recognize the location within the bus fabric wherein unit 28 will be able to snoop transactions between the bus clients. Also note that if system 26 contains multiple CPUs and/or multiple cache levels, unit 28 may need to be provided with cache coherency mechanisms to snoop CPU transactions occurring within cache memories or among different CPUs. Such cache coherency mechanisms are known in the art.

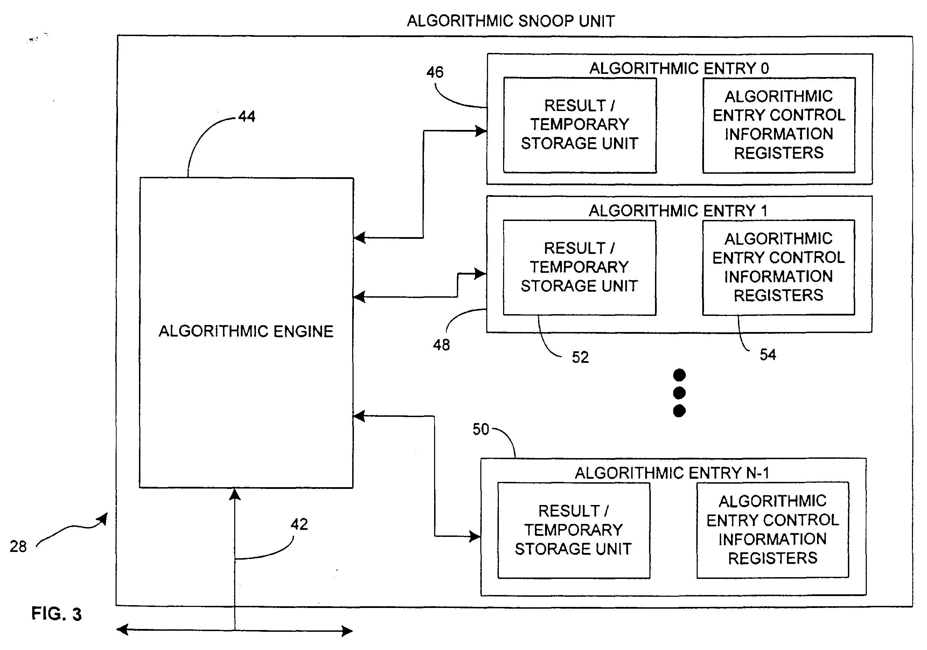

Figure 3 is a block diagram of algorithmic snoop unit 28. Unit 28 includes algorithmic engine 44, which is coupled to shared bus 42, and algorithmic entries 46, 48, and 50. Each algorithmic entry includes a result / temporary storage unit and algorithmic entry control information registers. For example, algorithmic entry 48 includes result / temporary storage unit 52 and algorithmic entry control information registers 54. Each algorithmic entry is coupled to algorithmic engine 44. Various registers and entries of algorithmic snoop unit 28 are accessible by system CPU 30 of Figure 2 by shared bus 42, as will be described in greater detail below.

Figure 3 includes *N* algorithmic entries. The number of algorithmic entries provided is based on the number of bus clients, the number of simultaneous transfers supported by each bus client, and the number of algorithms desired to be executed. Basically, a designer implementing the present invention will want to provide enough algorithmic entries to allow all desired algorithms to be executed simultaneously. For example, consider an encrypted data packet being received from network client 34 in Figure 1. Further assume that the encrypted data packet is part of a stream of data that is arriving at network client 34 and is being transmitted out at network client 36. In this example, it may be desirable to calculate a checksum for the incoming data from network client 34, decrypt the data from network client 34, and calculate a checksum in preparation for transmitting the data to network client 36. Accordingly, in this example, three algorithmic entries will be required. Performing an algorithm operation upon incoming data in anticipation of sending the data to another bus client will be discussed in greater detail below.

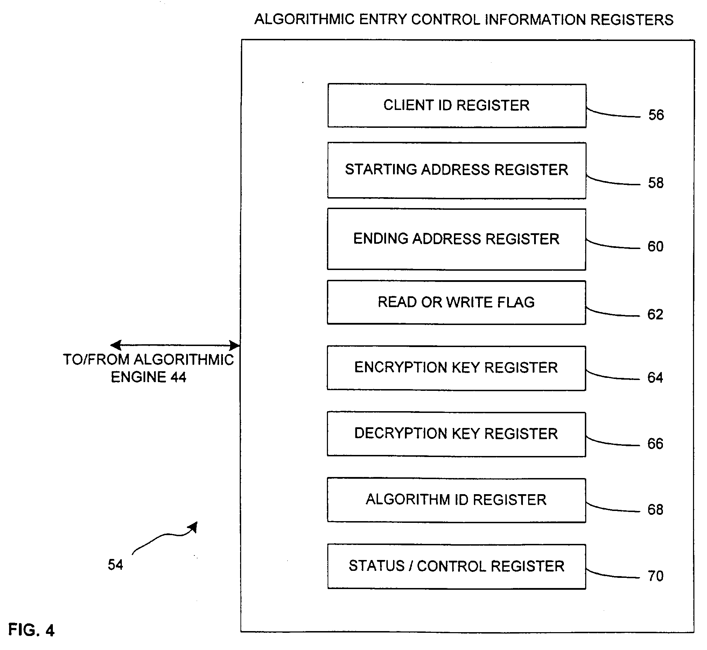

Figure 4 is a block diagram of algorithmic entry control information registers 54 of algorithmic entry 48 of algorithmic snoop unit 28 of Figure 3. Of course, Figure 4 represents the algorithmic entry control information registers of each of the algorithmic entries. Each of the registers is accessible by system CPU 30 of Figure 2 over shared bus 42. Registers 54 include client ID register 56, starting address register 58, ending address register 60, read or write flag 62, encryption key register 64, decryption key register 66, algorithm ID register 68, and status / control register 70.

Client ID register 56 defines the client that is reading data to or writing data from shared bus 42 in Figure 2. In accordance with the ASB-AMBA bus specification, the client ID is easily derived from bus control lines of shared bus 42. Other bus specifications may indicate the client ID in different ways, such as a multiplexed transaction. Those skilled in the art will recognize how to extract the client ID from a bus transaction for any given bus architecture. Note that algorithmic snoop unit 28 may itself be a client that is identified by the contents of client ID register 56. This will be described in greater detail below.

Starting address register 58 specifies the starting address upon which the algorithm will be executed. However, it may be desirable to have starting address register 58 specify three different values. First, it may be desirable to have starting address register 58 store the first address of a buffer in memory which has been configured to receive an incoming packet. This would be desirable, for example, if unit 28 configures algorithmic entries by snooping a configuration dialog between a CPU and a network client, as described in greater detail below. Second, as stated above, starting address register 58 must specify the starting address upon which the algorithm will be executed. Note that the starting address upon which the algorithm will be executed may be specified as an absolute address, or alternatively, as an offset from the first address of the buffer. Finally, starting address register 58 may include a word offset to indicate the position within the first word that should actually be used as the starting point for the calculation. For example, consider an Ethernet packet that includes a TCP/IP packet. If one desires to calculate a TCP/IP checksum on the data contained within the Ethernet packet, an offset from the first address of the buffer will be required to reach the data portion of the TCP/IP packet. If system 26 in Figure 2 addresses memory in 32-bit or 64-bit increments, the starting point may not fall on an even address boundary and it may also be necessary to specify a word offset.

Typically the starting address (as well as the ending address below) will be an address in system memory 32 in Figure 2. However, this is not required by the present invention. The address may also be an address mapped to any of the other bus clients. For example, the present invention may be used to execute an algorithm upon data as the data is DMA'd directly from a network client to a hard disk, provided the data is being stored in an address of the hard disk controller bounded by the starting and ending addresses stored in registers 58 and 60, respectively.

Ending address register 60 specifies the last address upon which the algorithm will be executed. Similar to starting register 58, it may be desirable to have ending address register 60 specify three different values. First, it may be desirable to have ending address register 60 store the last address of a buffer in memory which has been configured to receive an incoming packet. Note that the last address of the buffer may be stored as an absolute address or as an offset from the first address of the buffer stored in starting address register 58. Second, ending address register 60 must specify the last address upon which the algorithm will be executed. Note that the last address upon which the algorithm will be executed may be specified as an absolute address, or alternatively, as a negative offset from the last address of the buffer. Finally, ending address register 60 may include a word offset to indicate the position within the last word that should actually be used as the ending point for the calculation.

Read or write flag 62 indicates whether the algorithm should be executed if the bus client identified by client ID register 56 is writing data or reading data. Alternatively, a 2-bit register could be provided to allow the algorithm to be calculated if reading data, writing data, or either reading or writing data. This information is typically carried by a bus control line of shared bus 42.

Encryption key register 64 and decryption key register 66 hold encryption and decryption keys to be used if the algorithm is a cryptographic algorithm. Two keys may be required if the algorithm being executed is a combined decryption / encryption algorithm. Such an algorithm may be desirable if incoming data is being decrypted, and the decrypted data is being encrypted in preparation for transmission to another bus client. A combined decryption / encryption algorithm may also be performed by assigning the decryption portion of the algorithm to one algorithmic entry, assigning the encryption portion of the algorithm to a second algorithmic entry, and setting the client ID register of the second algorithmic entry to the algorithmic snoop unit 28 itself. As the data is decrypted in accordance with the parameters stored in the first algorithmic entry and unit 28 stores the decrypted data in a first memory range, unit 28 will snoop its own bus transactions and encrypt the data in accordance with the parameters stored in the second algorithmic entry. This will be described in greater detail below.

Algorithm register 68 holds an algorithm identifier that indicates which algorithm will be executed. Finally, status / control register 70 includes various flags that are required to control execution of the algorithm, and perform other housekeeping tasks. Flags within status / control register 70 include, but are not limited to, an active / inactive flag to indicate whether algorithmic engine 44 of Figure 3 should execute an algorithm in accordance with the contents of the registers of algorithmic entry 54, a finished flag that indicates whether the ending address has been reached, and an error flag that indicates whether an error condition has been encountered.

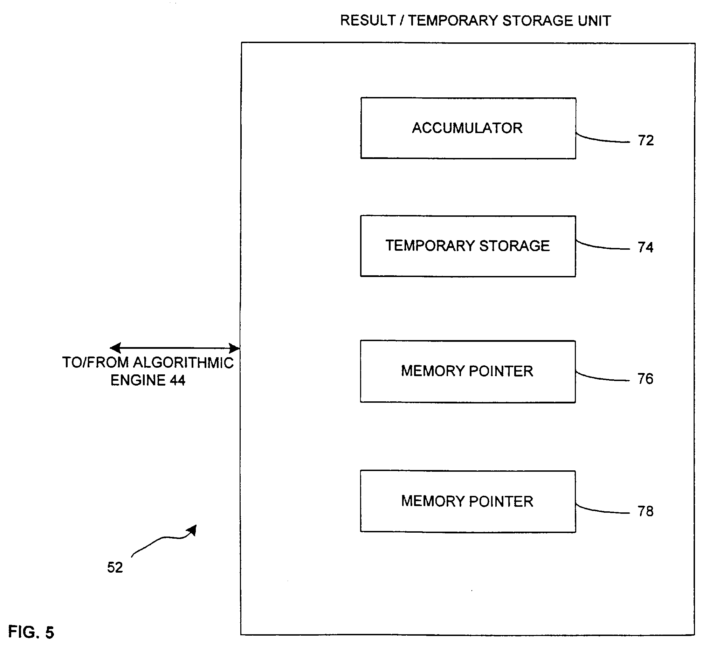

Figure 5 is a block diagram of result / temporary storage unit 52 of algorithmic entry 48 of algorithmic snoop unit 28 of Figure 3. Of course, Figure 5 represents the result / temporary storage unit of each of the algorithmic entries. Unit 52 includes an accumulator 72, temporary storage 74, and memory pointers 76 and 78. Accumulator 72 is used to accumulate checksums, cyclical redundancy checks, or other appropriate codes wherein the result of executing an algorithm upon a range of data is a single value or small number of values.

Temporary storage 74 is used as intermediate storage when calculating data. For example, if the algorithm being executed is a decryption algorithm that has a 128-bit decryption key, several data values from several transaction may need to be temporarily stored before the decryption key can be applied to a segment of data.

Accumulator 72 is used to store algorithmic results of limited size, such as 8 or 16 bytes. In contrast, memory pointers 76 and 78 point to regions in memory where longer results may be stored. For example, if an incoming Ethernet packet is being decrypted, then the decrypted results may be stored in the memory range indexed by memory pointer 76. As each word of data is stored, pointer 76 is incremented to point to the next address in memory. Furthermore, if the data stored in the packet is also being encrypted in anticipation of sending the data to another network client, then the algorithm can be a combined decryption / encryption algorithm that first decrypts and then encrypts the data, and the encrypted data may be stored in the memory range indexed by memory pointer 78. One implementing the present invention may choose to add additional memory pointers if required by the desired algorithms.

As mentioned above, if it is desired to both decrypt and encrypt incoming data, a single combined decryption / encryption algorithm can be used that first decrypts data, and then encrypts the data that was just decrypted. This method employs a single algorithmic entry and results in algorithmic snoop unit 28 producing two streams of data, the decrypted stream and the encrypted stream. Alternatively, two algorithmic entries may be used. The first entry is configured to snoop data from the network client, decrypt the data using the decryption key stored in register 66 of Figure 4, and store the decrypted data in the memory range indexed by memory pointer 76 of the first entry. The second entry is configured to snoop the decrypted data being written by algorithmic snoop unit 28 itself. The data snooped by the second entry is the decrypted data being written to the memory locations indexed by memory pointer 76 of the first entry. The algorithm ID stored in register 68 of the second entry invokes an encryption algorithm, and the encrypted data is stored in the memory locations indexed by memory pointer 76 of the second entry. This method may be preferable because it may not be practical to combine different decryption and encryption algorithms into a combined decryption / encryption algorithm.

Note that some cryptographic algorithms may operate on large blocks of data, in which case using the memory pointers is appropriate. However, other cryptographic algorithms may only operate on a few bytes at a time, in which case the results can be stored in accumulator 72 and be retrieved periodically be system CPU 30 in Figure 2.

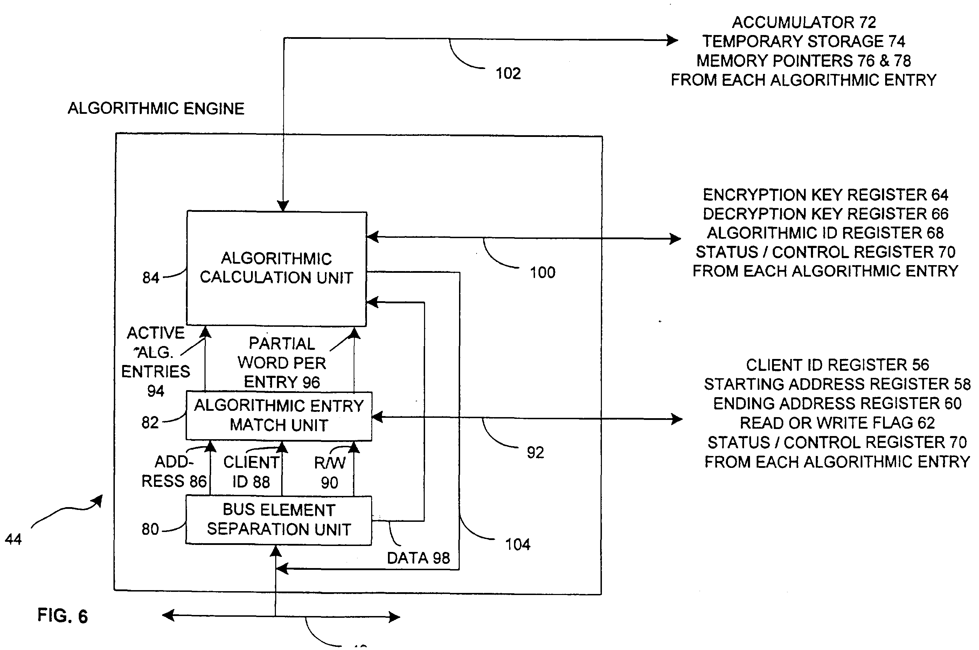

Figure 6 is a block diagram of algorithmic engine 44 of Figure 3, which is part of algorithmic snoop unit 28 of Figure 3. Algorithmic engine 44 includes bus element separation unit 80, algorithmic entry match unit 82, and algorithmic calculation unit 84.

Algorithmic snoop unit 28 snoops every bus transaction. Accordingly, every bus transaction is provided to bus element separation unit 80 via shared bus 42. Bus element separation unit 80 separates each bus transaction into an address that is provided on address bus 86, a client ID that is provided on client ID bus 88, a read / write signal that is provided on R/W line 90, and data which is provided on data bus 98. Note that if all this information is provided by individual lines of shared bus 42, the implementation of unit 80 is trivial. However, if shared bus 42 uses multiplexed or pipelined transactions, then unit 80 may need to be implemented using demultiplexers, latches, and similar logic. Those skilled in the art will recognize how to implement bus element separation unit 80 for any given bus architecture.

Address bus 86, client ID bus 88, and R/W line 90 are provided to algorithmic entry match unit 82. For each bus transaction, algorithmic entry match unit 82 determines whether an algorithmic entry needs to be processed. Note that more than one algorithmic entry may be invoked for any given bus transaction. Also note the bus transactions carrying a particular stream of data need not be contiguous. In other words, the transactions may be interleaved. For example, a particular algorithmic entry might only be invoked once every 20 or 30 bus transactions, with the other transactions carrying other data between other sets of bus clients.

As mentioned above, unit 82 receives the address, client ID, and read or write status of the transaction from bus element separation unit 80. Unit 82 also receives the contents of client id register 56, starting address register 58, ending address register 60, read or write flag 62, and status / control register 70 from each algorithmic entry in Figure 3 via bus 92. For each algorithmic entry that is active based on status /control register 70, unit 82 determines whether the client ID from the transaction matches the client ID stored in client ID register 56 of the algorithmic entry, whether the address of the transaction falls within the range specified by starting address register 58 and ending address register 60 of the algorithmic entry, and whether the read / write status of the transaction matches the read / write flag stored in read or write flag 62 of the algorithmic entry. If all three of these parameters match for any (or multiple) algorithmic entries, unit 82 indicates that the appropriate algorithmic entries should be processed by asserting a corresponding line of active algorithmic entries bus 94.

Algorithmic entry match unit 82 also provides "partial word per entry" bus 96. For each entry, bus 96 indicates whether the algorithm should be executed upon the whole memory word carried by data bus 98, or just a portion of the word. The information carried by bus 96 is derived from the word offset information stored in starting address register 58 and ending address register 60, as discussed above. Of course, registers 58 and 60 could also be provided directly to algorithmic calculation unit 84, in which case bus 96 would not be needed because the same information could be generated within unit 84.

For each active algorithmic entry specified by active algorithmic entries bus 94, algorithmic calculation unit 84 executes the algorithm based on the transaction data carried by data bus 98 and the operands stored in algorithmic entry control information registers 54 of Figure 4 and result / temporary storage unit 52 of Figure 5. Algorithmic calculation unit 84 receives the contents of encryption key register 64, decryption key register 66, and algorithmic id register 68 for each active algorithmic entry via bus 100. Status / control register 70 is also carried between each algorithmic entry and unit 84 via bus 100 to provide any status or control information, and to allow unit 84 to set any error or condition flags in the registers 70. Algorithmic calculation unit 84 also has access to accumulator 72, temporary storage 74, and memory pointers 76 & 78 for each active algorithmic entry via bus 102.

Based on the information provided by the active algorithmic entries and the transaction data provided by data bus 98, unit 84 executes an algorithm for each active algorithmic entry. The actual implementation of algorithmic calculation unit 84 will, of course, vary based on the types of algorithms supported. For example, if the present invention is only used to calculate checksums, then unit 84 would simply be a series of adders,that add the transaction data to the contents of accumulator 72 and store the results back to accumulator 72. However, if unit 84 provides cryptographic algorithms, it will obviously be more complex. Those skilled in the art will recognize how to implement unit 84 to support the algorithms desired.

Note that algorithms supported by unit 84 may be implemented in hardware, or unit 84 may contain programmable elements and the algorithms may be implemented by software code or microcode. Also, if the algorithms are implemented as software code or microcode, the code may be stored in a BIOS routine of unit 84, or may be stored in unit 84 under control of system CPU 30 of Figure 2.

Finally, as discussed above, some of the algorithms supported by unit 84 may need to store data in system memory 32 of Figure 2 because the data stream produced by such algorithms is too large to store in an algorithmic entry. This was discussed above with reference to memory pointers 76 and 78 of Figure 5. Such data is carried by bus 104 to shared bus 42, and algorithmic snoop unit 28 stores this data in memory just like any other bus client. As mentioned above and discussed in greater detail below, algorithmic snoop unit 28 may snoop its own data in accordance with the contents of algorithmic entries.

Having discussed the implementation algorithmic snoop unit 28 above, it is helpful to understand how software being executed by system CPU 30 of Figure 2 can best utilize unit 28. Before giving specific examples, first consider that unit 28 calculates algorithms on the fly as data is transferred between bus clients. The software may or may not know what algorithms need to be calculated for each transfer before the transfer begins. For this reason, it is beneficial to have all of the algorithms provided by unit 28 also be available as software routines.

For example, consider that a stream of data being received by an Ethernet adaptor using the TCP/IP protocol is being stored in memory. When the first packet arrives, CPU 30 does not know what protocol will be encapsulated within the packet (though it could guess), and therefore it is possible that no algorithms will have been configured in algorithmic snoop unit 28 to calculate the checksum for this packet. Therefore, a software module that implements the TCP/IP stack may have to calculate the TCP/IP checksum for the first packet. Thereafter, the module predicts that subsequent packets are part of the same data stream, and configures algorithmic entries to perform the checksum calculation for each subsequent packet. If the module's prediction is incorrect, the module simply uses the software-based version of the appropriate algorithm. However, if the prediction is correct (as it almost always will be), the performance benefits provided by the present invention will be realized.

Also note that when receiving an Ethernet packet that includes a TCP/IP packet, it will usually be the case that the end of the Ethernet packet is not known until the whole packet arrives. In this situation, the checksum may include a few bytes beyond the end of the TCP/IP packet, such as the MAC CRC. The software module can handle this situation by treating the checksum as a "gross checksum" and subtracting a "difference checksum" to reach the TCP/IP checksum, as is known in the art and discussed above.

Executing an algorithm upon incoming data is fairly straightforward, the software module that predicts that the algorithm will be needed simply configures an algorithmic entry of snoop unit 28 to execute the algorithm. However, performing an algorithm upon outgoing data is more complex. Consider that a TCP/IP packet includes a TCP/IP header that includes a checksum. The TCP/IP header comes before the TCP/IP data. Accordingly, as the packet is being transmitted out by a network client, the checksum must be known before the whole packet is transmitted. Accordingly, for a TCP/IP packet, algorithmic snoop unit 28 will not be able to generate a checksum on the fly because the checksum will already have been transmitted before unit 28 can finish calculating the checksum.

There are several ways to address this problem. One of the foremost benefits provided by the present invention is that the execution of the algorithm may be "piggy backed" upon a memory transfer that must occur anyway. Accordingly, if the outgoing packet is stored in storage unit 40, algorithmic snoop unit 28 can be configured to snoop the memory transactions of storage unit 40 as unit 40 writes the packet to system memory 32 in preparation for sending the outgoing data to another bus client. Similarly, assume that a software module detects that incoming data from network client 34 is immediately being transmitted as outgoing data to network client 36 in Figure 2. This is a common in a print server, where incoming data from a computer is immediately sent as outgoing data to a printer. In this situation, the software module can configure one algorithmic entry to calculate the checksum required for the incoming data packet, and configure another algorithmic entry to calculate the checksum required for the outgoing data. Accordingly, both checksums are calculated as the incoming data is DMA'd into memory by the network client that is receiving the data.

Even assuming that it is not possible to identify a memory transfer upon which execution of the algorithm can be "piggy backed", algorithmic snoop unit 28 can still be configured to snoop memory read transactions by system CPU 30 for the memory range containing the outgoing packet. CPU 30 simply reads all memory locations that contain the packet, and then retrieves the checksum from unit 28. While this method requires that the data be "touched", CPU cycles are still saved because the CPU need only read the data, and does not have to calculate the checksum because the checksum is calculated concurrently by unit 28.

As a final example, consider that system 26 of Figure 2 is a Hewlett-Packard JetDirect print server, network client 34 is an Ethernet adapter, and network client 36 is a HomePNA adapter. Assume that the Ethernet adapter is coupled to a computer via an Ethernet connection, the HomePNA adapter is coupled to a printer by a HomePNA connection, data sent over the HomePNA connection must be encrypted, and TCP/IP is used to send data over both adapters. Further assume that the computer is sending data to the printer, several packets have been transmitted, and the relevant software modules executed by system CPU 30 have detected that the data stream described above is active. First, system CPU 30 defines a region in memory to receive the incoming packets. Such memory regions are often referred to in the art as "buffers", and each buffer will typically be a couple of kilobytes. In this example, the buffer defined by CPU 30 will be referred to as the "first buffer".

Next CPU 30 will configure a first algorithmic entry to calculate the TCP/IP checksum for the incoming packet. Client ID register 56 will be set to refer to network client 34, starting address register 58 will be set to refer to the location within the buffer where the beginning of the TCP/IP data is expected to be stored, ending address register 60 will be set to the end of the buffer, read or write flag 60 will be set to "write", and algorithmic ID register 68 will be set to "checksum". Finally, status / control register 70 will be set to indicate that the entry is active.

Next CPU 30 will configure a second algorithmic entry to encrypt the data in anticipation of sending the data to the HomePNA adapter. Again, client ID register 56 will be set to refer to network client 34, starting address register 58 will be set to refer to the location within the buffer where the beginning of the TCP/IP data is expected to be stored, ending address register 60 will be set to the end of the buffer, read or write flag 60 will be set to "write". Furthermore, the encryption key will be stored in encryption key register 64, the algorithm ID register will be set to indicate the proper encryption algorithm, memory pointer 76 of Figure 5 will be set to point to a second buffer in system memory 32 to receive the encrypted data from algorithmic snoop unit 28, and status / control register 70 will be set to indicate that the entry is active.

Finally, CPU 30 will configure a third algorithmic entry to calculate the TCP/IP checksum of the encrypted data in anticipation of sending the encrypted data to the HomePNA adapter. Since the encrypted data is generated by algorithmic snoop unit 28, unit 28 must be configured to snoop its own transactions to calculate the checksum. Accordingly, client ID register 56 will be set to refer to algorithmic snoop unit 28, starting address register 58 will be set to refer to the same location as memory pointer 76 of the second algorithmic entry (the beginning of the second buffer), ending address register 60 will be set to the end of the second buffer, read or write flag 60 will be set to "write" and algorithmic ID register 68 will be set to "checksum". Finally, status / control register 70 will be set to indicate that the entry is active.

Now that all three algorithmic entries have been configured, assume that the Ethernet adapter (network client 34 in this example) begins to receive a data packet. As the data is received the Ethernet adapter DMA's the data into the first buffer, with algorithmic snoop unit 28 snooping each transaction. When a memory transaction carrying the first word of TCP/IP data occurs, algorithmic entry match unit 82 of Figure 6 will detect that the first and second algorithmic entries are active. When the second algorithmic entry is processed, algorithmic snoop unit 28 will initiate a bus transaction (either at this point or after a few more words are received from the Ethernet adapter) to store the encrypted data in the second buffer. Unit 28 will snoop its own transaction, and the transaction generated by the second algorithmic entry will cause the third algorithmic entry to begin active, thereby calculating the TCP/IP checksum for the outgoing encrypted data.

This process will continue for each word of the packet until all bytes of the packet are received. When the packet is received, the appropriate software modules will inactivate the three algorithmic entries, thereby making them available for another calculation. The appropriate software module will also access accumulator 72 of Figure 5 of the first algorithmic entry to retrieve the incoming TCP/IP checksum. The retrieved checksum will then be compared to the checksum included with the packet to verify the integrity of the packet.

Next, the outgoing TCP/IP checksum will be retrieved from accumulator 72 of the third algorithmic entry. The outgoing checksum can be stuffed into the proper location of the second buffer, and the HomePNA adapter can be signaled to transmit the encrypted data stored in the second buffer.

Consider the substantial advantages the present invention provides over the prior art. As soon as the incoming packet is received, the incoming and outgoing checksums are available, the data has been encrypted, and the outgoing packet is ready to transmit. All calculations are done in parallel with the reception of the incoming data, and few extra transactions are required to execute the algorithms. Even when algorithmic snoop unit 28 generates memory transactions (such as when encrypting data), these transaction will tend to be interleaved with the transactions generated by the network client (or other bus client) and will not slow down the reception rate of the network client. Note that in the above example, even if the incoming data was encrypted, it could be easily decrypted by using a combined decryption / encryption algorithm, as discussed above, or by configuring a fourth algorithmic entry.

In contrast, prior art techniques require that the data be "touched" several times. While some prior art techniques do provide for the calculation of various algorithms "on the fly", none approach the problem as comprehensively and efficiently as the present invention. The present invention allows many algorithms to be calculated concurrently by snooping transactions that must occur anyway.

Furthermore, the present invention is extremely flexible. Transactions from any bus entity (even the algorithmic snoop unit of the present invention itself) can form the basis of an algorithmic calculation. Accordingly, the present invention can execute algorithms on memory-to-memory transfers, network adapter-to-memory transfers, disk-to-memory transfers, and the like.

In the examples above, the algorithmic entries of algorithmic snoop unit 28 where configured by CPU 30 in anticipation of a data transfer between bus clients. However, in another embodiment, even this minimal task may be eliminated. Assume that for each bus client in Figure 2, algorithmic snoop unit 28 includes a "bus client configuration dialog monitor unit". Each monitor unit is responsible for snooping a configuration dialog targeted at the bus client to which the monitor unit is assigned, and possibly configuring an algorithmic entry based on the snooped configuration dialog. For example, assume system CPU 30 engages in a dialog with network client 34 instructing client 34 to store the next incoming packet in a buffer bounded by memory addresses A and B. The monitor unit assigned to network client 34 snoops this dialog, and configures an algorithmic entry to execute an algorithm (such as a checksum) upon the incoming packet. After the packet is received, CPU 30 simply retrieves the algorithm result from algorithmic snoop unit 28.

As discussed above, it may be desirable for starting address register 58 and ending address register 60 to each store three values: an absolute address which defines a buffer boundary, an offset or absolute address that indicates the beginning or ending address of the range upon which the algorithm should be executed, and a word offset that indicates the beginning or ending position within a word. One of the reasons this is desirable is because if an algorithmic entry is configured by a monitor unit that snoops a configuration dialog, as described above, the values snooped will include the buffer boundary. In contrast, the offset or absolute address that indicates the beginning or ending address upon which the algorithm should be executed and the word offset that indicates the beginning or ending position within a word tend to be based on the protocol.

For example, assume that CPU 30 configures network client 34 to store the next incoming packet in a buffer bounded by memory addresses A and B. Further assume that all incoming packets transmit data using either the TCP/IP protocol or the NetBEUI protocol. A monitor unit snooping the configuration dialog will only observe one dialog. However, the monitor unit can configure two algorithmic entries, one for each protocol. The buffer boundaries will be memory addresses A and B for each entry, but the range upon which the algorithm will be executed will vary with protocol.

On of the truly wonderful advantages provided by the present invention in general (and the above embodiment in particular) is that the present invention can calculate many algorithms upon a single data stream simultaneously. Accordingly, algorithmic snoop unit 28 may be configured to execute an algorithm for every protocol and data stream format expected to be used. For example, after a packet has been received, the packet in the buffer is examined to determine the protocol used. Thereafter, CPU 30 retrieves the appropriate value from the algorithmic entry corresponding to the protocol. Every algorithm that could possibly be used may be executed without incurring a performance penalty.

The present invention provides a significant performance advantage compared to prior art methods of calculating packet checksums. For example, the present invention provides approximately a 30% improvement over memory-to-memory hardware-based checksumming facilities, and approximately a 15% improvement over fly-by checksumming methods, such at that disclosed by Brian M. Dowling et al.

Those skilled in the art will recognize other applications wherein the present invention may be advantageously applied. For example, the present invention could be used to decode an MPEG video data stream as the stream is being transferred into memory. In conclusion, the present invention provides a whole new class of data processing possibilities wherein algorithms can be executed upon data that is "in transit" upon a shared bus.

Although the present invention has been described with reference to preferred embodiments, workers skilled in the art will recognize that changes may be made in form and detail without departing from the scope of the invention.

## Claims

1. An algorithmic snoop unit coupled to a shared bits and capable of executing algorithms upon data carried by bus transactions comprising:
one or more algorithmic entries, with each algorithmic entry holding information that indicates whether an algorithm should be calculated for a particular bus transaction; and
an algorithmic engine that compares information carried in a bus transaction with the information held in each algorithmic entry to determine if the algorithmic entry should be active for that transaction, and executes an algorithm based on data carried by the bus transaction for each active algorithmic entry.

2. The algorithmic snoop unit of claim 1 wherein each algorithmic entry comprises:
a result / temporary storage unit; and
a set of algorithmic entry control registers.

3. The algorithmic snoop unit of claim 2 wherein the set of algorithmic entry control registers includes:
a client ID register that stores a value identifying a bus client of the bits transaction;
a starting address that stores a value indicating a starting address of a range of addresses upon which an algorithm should be executed; and
an ending address register that stores a value indicating an ending address of the range of addresses upon which an algorithm should be executed.

4. The algorithmic snoop unit of claim 3 wherein the set of algorithmic entry control registers further includes:
a read or write flag that stores a value that indicates whether an algorithm should be executed if the bus transaction carries a read operation or a write operation.

5. The algorithmic snoop unit of claim 4 wherein the set of algorithmic entry control registers further includes:
a status / control register that stores values related to the status and control of the algorithmic snoop unit; and
an algorithmic ID register that stores a value that identifies an algorithm that should be executed upon data contained in the bus transaction.

6. The algorithmic snoop unit of claim 5 wherein the set of algorithmic entry control registers further includes:
a cryptographic key register that stores a cryptographic key to be used in conjunction with a cryptographic algorithm.

7. The algorithmic snoop unit of claim 3 wherein the result / temporary storage unit includes:
an accumulator for accumulating results from algorithms calculated upon one or more bus transactions.

8. The algorithmic snoop unit of claim 7 wherein the result / temporary storage unit further includes:
temporary storage for storing temporary data during execution of algorithms; and
one or more memory pointers that index a location in memory where results produced by execution of algorithms may be stored.

9. The algorithmic snoop unit of claim 8 wherein the algorithmic snoop unit is capable of snooping its own bus transactions.

10. The algorithmic snoop unit of claim 1 wherein the algorithmic engine comprises:
a bus element separation unit that extracts a client ID, an address, and data from a bus transaction;
an algorithmic entry match unit that compare information extracted from the bus transaction with information stored in each algorithmic entry, and determines which algorithmic entries are active for a particular bus transaction; and
an algorithmic calculation unit that executes an algorithm for each active entry.
